# EUROPÄISCHE PATENTANMELDUNG

(11) **EP 2 182 268 A1**
(43) Veröffentlichungstag der Anmeldung: **05.05.2010**
(21) Anmeldenummer: 08019197.6
(22) Anmeldetag: 03.11.2008
(51) Int. Cl.: F16L 53/00, F16L 59/02, F16L 59/14

(54) **Heiz- oder Kühlanordnung für eine Rohrleitung**

(71) Anmelder: Brugg Rohr AG, Holding, 5200 Brugg (CH)
(72) Erfinder: Drübert, Dirk, 79733 Göhrwill (DE); Rymann, Urs, 8243 Mülligen (CH)
(74) Vertreter: Schalch, Rainer

(57) **Zusammenfassung**

Für eine Rohrleitung, die beheizt oder gekühlt werden muss, ist eine aus Schalenteilen (2'') zu bildende Schale (2) mit einer Wärmeisolation (4) als Umhüllung der Rohrleitung vorgesehen. In der Wärmeisolation sind Wärmeleitelemente (7, 8) angeordnet, in denen eine Leistung (6) für das Heiz- oder Kühlmedium verläuft, wobei die Wärmeleitelemente mindestens teilweise die Innenwandung der Wärmeisolation ausbilden, die der Rohrleitung zugewandt ist. Damit können Rohrleitungen auf einfache Weise mit einer Heizung oder Kühlung versehen werden.

## Beschreibung

### Hintergrund der Erfindung

Die Erfindung betrifft eine Heiz- oder Kühlanordnung für eine Rohrleitung. Ferner betrifft die Erfindung eine Anlage mit einer Rohrleitung sowie ein Verfahren zur Heizung von Rohrleitungen.

### Stand der Technik

Es ist bekannt, zu heizende oder kühlende Rohrleitungen als doppelwandige Rohrleitungen auszuführen, wobei im Ringspalt zwischen innerem Rohr und äusserem Rohr das Heiz- oder Kühlfluid zirkuliert. Solche Anordnungen sind nur aufwändig montierbar und eignen sich nicht für eine rasche Nachrüstung einer Heizung oder Kühlung. Es sind ferner elektrische Begleitheizungen bei Rohrleitungen bekannt.

### Darstellung der Erfindung

Es soll eine Heiz- oder Kühlanordnung für Rohrleitungen geschaffen werden, welche die genannten Nachteile nicht aufweist und sich insbesondere für eine nachträgliche Montage an Rohrleitungen eignet.

Diese Aufgabe wird mit einer Heiz- oder Kühlanordnung für eine Rohrleitung gelöst, welche eine zum Umschliessen der Rohrleitung ausgebildete wärmeisolierende Schale aufweist, deren der Rohrleitung zugewandte Innenwandung mindestens teilweise von einem Wärmeleitungselement gebildet ist, das mit mindestens einer in der Schale verlaufenden Leitung für ein Heiz- oder Kühlmedium in Wärmeleitverbindung steht.

Durch eine Schale, die sowohl eine Wärmeisolierung als auch die Heiz- oder Kühlleitung aufweist, kann eine einfache Nachrüstung einer Heizung oder Kühlung für eine Rohrleitung erfolgen. Insbesondere bei der bevorzugten Bildung der Schale aus mehreren Schalenteilen kann sogar eine Nachrüstung bei in einer Anlage eingebauten Rohrleitungen erfolgen. Weiter ergibt die anspruchsgemässe Lösung eine gute Wärmeübertragung an die Rohrleitung und auch eine gute Isolation gegen Wärmeverluste.

Die Aufgabe wird ferner mit einer Anlage nach Anspruch 14 und mit einem Verfahren nach Anspruch 16 gelöst.

### Kurze Darstellung der Zeichnungen

Im Folgenden werden Ausführungsbeispiele der Erfindung an Hand der Figuren erläutert. Dabei zeigt
Figur 1 grob schematisch eine Anlage mit einer Rohrleitung;
Figur 2 eine vereinfachte stirnseitige Ansicht auf eine Rohrleitung mit einer Heiz- oder Kühlanordnung;
Figur 3 eine schaubildliche teilweise Ansicht eines Schalenteils der Heiz- oder Kühlanordnung von Figur 2.

### Wege zur Ausführung der Erfindung

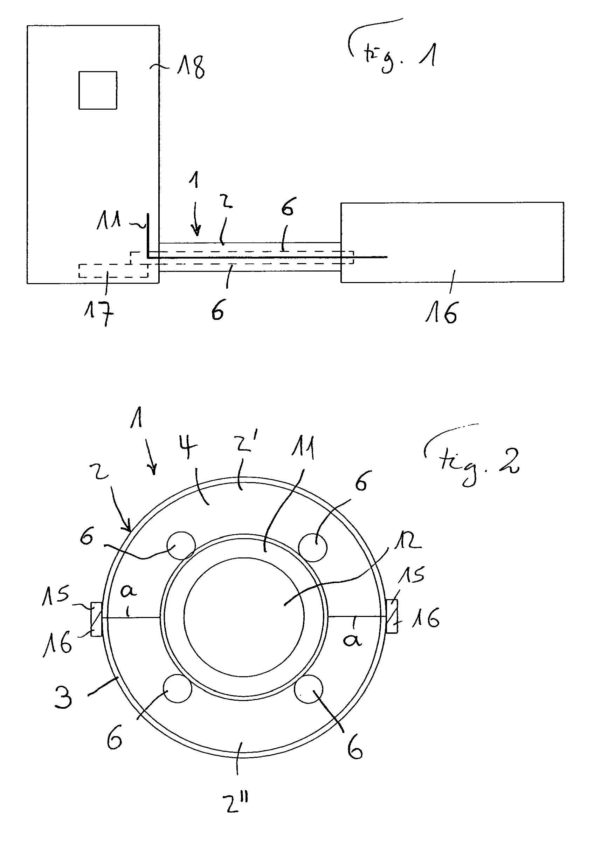

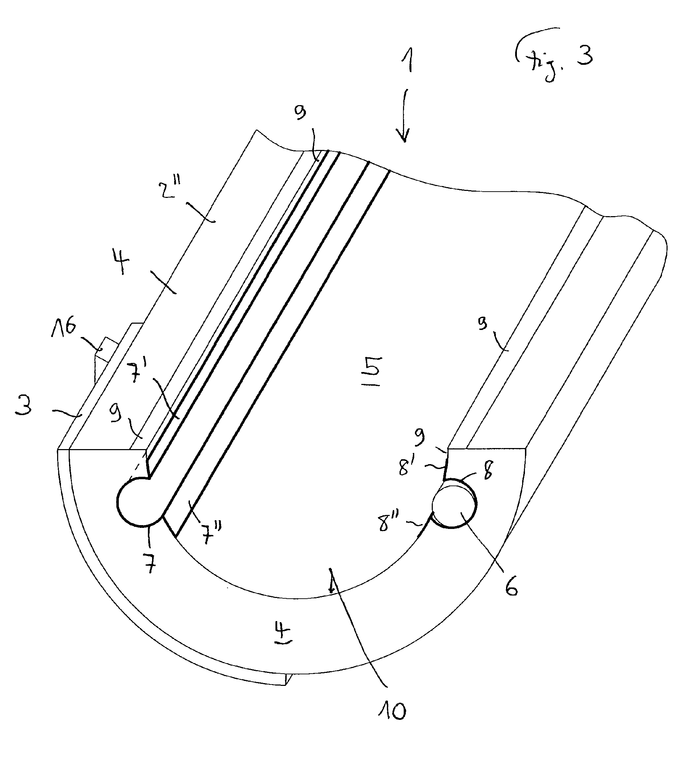

Figur 1 zeigt in grob schematischer Darstellung eine Anlage mit den Anlageteilen 16 und 18, zwischen denen eine Rohrleitung 11 vorgesehen ist, als vereinfachtes Beispiel für eine Rohrleitung bzw. eine Anwendung der Heiz- oder Kühlanordnung gemäss der Erfindung Diese wird dann an Hand der Figuren 2 und 3 näher beschrieben. Durch die nur als Linie angedeutete Rohrleitung 11 wird ein flüssiges Produkt, welches bei dem Transport durch die Rohrleitung geheizt oder gekühlt werden muss, von einem Anlageteil zu einem anderen Anlageteil gefördert. Insbesondere könnte in einem Beispiel flüssige Schokolade von einem geheizten Tank 18 zu einer Verarbeitungseinheit 16 gefördert werden. Zwischen den Einheiten 18 und 16 ist die Rohrleitung 11 durch eine Heiz- oder Kühlanordnung 1 gemäss der Erfindung geheizt oder gekühlt, wobei in Figur 1 lediglich angedeutet ist, dass die Anordnung 1 eine um die Rohrleitung 11 herum gelegte Schale 2 aufweist und dass in dieser Leitungen 6 verlaufen, in welchen ein geheiztes oder gekühltes Fluid zirkuliert, welcher der Heizung oder der Kühlung des Rohres 11 dient. In Figur 1 ist dazu ein Heizaggregat oder ein Kühlaggregat 17 angedeutet, von welchem aus eine der Leitungen 6 von der Einheit 18 aus zur Einheit 16 führt und von dort zurückgeführt wird, sodass sich eine Zirkulation des Fluides ergibt, welches die Heizung oder die Kühlung bewirkt. Wie das Fluid in den Leitungen 6 zirkuliert bzw. durch diese Leitungen gepumpt wird und ausserhalb der Leitungen gekühlt oder geheizt wird, wird nachfolgend nicht weiter erläutert und die entsprechenden Mittel gehören nicht zur vorliegenden Erfindung. Die Bereitstellung und das Pumpen von geheizten oder gekühlten Fluiden, insbesondere von geheiztem Wasser oder gekühltem Wasser, ist dem Fachmann bekannt und muss hier nicht genauer dargestellt werden. Damit das Fluid in die Leitungen 6 eingekoppelt werden kann, sind diese mit entsprechenden Kupplungen versehen, was nachfolgend auch nicht weiter erläutert wird. Die Heiz- oder Kühlanordnung ist in der Figur 1 nur an einer einfachen geraden Rohrleitung 11 angeordnet. Dies ist natürlich nur ein sehr einfaches Beispiel. Die Rohrleitung 11 kann einen beliebigen Verlauf nehmen und kann verzweigt sein. Sie kann sich über eine sehr kurze Distanz von z.B. wenigen Metern oder über eine sehr lange Distanz, von z.B. hunderten von Metern erstrecken. Bei sehr langen Rohrleitungen kann es notwendig sein, dass die Heiz- oder Kühlanordnung in Sektionen aufgeteilt wird, in welche jeweils separat erhitztes oder gekühltes Fluid in die Leitungen 6 zugeführt wird. Die nachfolgenden Erläuterungen zur Heiz- oder Kühlanordnung werden anhand von geradlinig verlaufenden Beispielen gemacht. Es ist dem Fachmann aber ersichtlich, dass auf dieselbe Weise und durch lediglich fachmännische Anpassungen bogenförmige Abschnitte oder T-Stücke oder Muffen geschaffen werden können. Durch die Kombination von geradlinigen Teilen und bogenförmigen Teilen oder T-Stücken oder Muffen der Anordnung kann jede beliebige Rohrleitung mit der entsprechenden Heiz- oder Kühlanordnung versehen werden. Es ist auch möglich bei einer Rohrleitung nur die geraden Abschnitte mit einer Heizung oder Kühlung gemäss der Erfindung zu versehen und bei Bögen oder Abzweigungen nur eine Wärmeisolation vorzusehen sowie die Leitungen für das Heiz- oder Kühlfluid auf bekannte Weise weiter zu führen, so dass im Bogen oder in der Abzweigung selber die Rohrleitung für das Produkt nicht geheizt oder gekühlt wird bzw. nur durch die anschliessenden geraden Abschnitte mit Heizung oder Kühlung mitbeheizt oder gekühlt wird.

Anhand der Figuren 2 und 3 wird nun ein Ausführungsbeispiel näher erläutert. Dabei zeigt Figur 2 eine stirnseitige Ansicht einer Rohrleitung mit einer Heiz- oder Kühlanordnung gemäss einem bevorzugten Ausführungsbeispiel und Figur 4 zeigt den unteren Schalenteil ohne die Rohrleitung und mit nur einer der Leitungen für das Heiz- oder Kühlfluid zur besseren Darstellung und Erläuterung. Dabei ist in Figur 3 nur ein Abschnitt der unteren Schale gezeigt und auch der Aussenmantel der Schale ist nur teilweise dargestellt.

In Figur 2 ist in stirnseitiger Draufsicht die Rohrleitung 11 gezeigt, in deren Hohlraum 12 das zu heizende oder kühlende flüssige Gut, so z.B. flüssige Schokolade, welche beheizt werden muss oder Schweröl, welches beheizt werden muss, gefördert wird. Um die Rohrleitung 11 ist die Heiz- oder Kühlanordnung 1 dargestellt. Diese weist eine Schale 2 auf, welche die Rohrleitung 11 umhüllt. Die Schale 2 isoliert die Rohrleitung 11 gegen Wärmeverlust nach aussen und ist somit eine wärmeisolierende Schale. Zu diesem Zweck weist sie bevorzugt ein Wärmedämmmaterial 4 aus Kunststoff auf. Bevorzugt ist, dass ein geschäumter Kunststoff und insbesondere ein Polyuretanschaum eingesetzt wird. Natürlich sind auch weitere Kunststoffmaterialien oder andere wärmedämmende Materialien für die Wärmedämmung 4 einsetzbar. Bevorzugt weist die Schale ferner einen Aussenmantel 3 auf, welcher insbesondere aus einem dünnen Metallrohr oder einem Kunststoffrohr gebildet sein kann. Bevorzugt ist die Wärmedämmung 4 am Mantel 3 befestigt. Dies kann durch ein Verbindungsmittel zwischen Mantel 3 und Wärmedämmung 4 erfolgen, z.B. einem Klebstoff, oder auch dadurch, dass die Wärmedämmung 4 direkt in den Mantel hinein geschäumt worden ist. Dazu werden Formen verwendet, was dem Fachmann bekannt ist und hier nicht weiter erläutert wird. Figur 2 zeigt einen bevorzugten Aufbau der Anordnung 1, bei welcher deren Schale 2 aus mehreren separaten Schalenteilen besteht, welche zusammenpassend die vollständige Schale für die Rohrleitung 11 ergeben. In der Figur ist eine Ausführung mit zwei Schalenteilen 2' und 2'' dargestellt, welche entlang einer horizontalen Trennlinie a voneinander getrennt sind. Diese Ausführung ermöglicht die vorteilhafte Montage der Heiz- oder Kühlanordnung 1 an in einer Anlage montierte Rohrleitungen, indem die beiden Schalenteile um das Rohr herum platziert und dann befestigt werden können. Natürlich kann die Trennlinie a auch vertikal verlaufen. Ferner können mehr als zwei Schalenteile vorgesehen sein, welche zusammen die ganze Schale bilden. Bevorzugt erfolgt die Befestigung dadurch, dass die Schalenteile 2' und 2'' aneinander befestigt werden, wozu diese bevorzugt mit beliebigen Befestigungsmitteln 15 und 16 am Aussenmantel 3 versehen sind, welche eine Befestigung durch Schnapphaken oder Verschraubung oder auf andere Weise ermöglichen. Sind keine Befestigungsmittel an den Schalenteilen selber vorgesehen, so können diese mit Spannbändern oder auf andere bekannte Weise am Rohr 11 befestigt werden. Anstelle einer vollständigen Trennung in separate Schalenteile 2', 2" können diese auch einseitig mit einem Scharnier permanent aneinander befestigt sein, so dass die Schale am Scharnier aufgeklappt werden kann, um diese um die Rohrleitung herum zu legen. Für Halterungen, welche die Rohrleitung 11 an Böden, Decken oder Anlageteilen befestigen, können in den Schalen Ausnehmungen angeordnet werden. Deren Anbringung bei der Montage der Schale an der Rohrleitung oder bereits vorher bei der Herstellung der Schalen, wenn die Platzierung der Ausnehmungen gegeben ist, ist für den Fachmann klar und braucht hier nicht weiter erläutert zu werden.

Weiter sind in der Anordnung 1 bzw. in der Schale 2 Leitungen 6 vorgesehen, welche das Kühlmedium oder Heizmedium führen, so insbesondere warmes oder kaltes Wasser oder beliebige andere dem Fachmann zur Heizung oder zur Kühlung der Rohrleitung 11 bekannte Substanzen. Es kann nur eine Leitung 6 vorgesehen sein. Es können aber auch zwei Leitungen vorgesehen sein, wie dies in Figur 1 schematisch angedeutet ist, wobei die eine Leitung 6 in diesem Fall eine Vorlaufleitung und die andere Leitung 6 eine Rücklaufleitung für das Fluid sein kann. Bevorzugt ist weiter eine Ausführung mit vier Leitungen 6, wie dies in Figur 2 und sinngemäss auch in Figur 3 dargestellt ist, worin zwei Leitungen 6 in der unteren Schale 2' vorgesehen sind. In der vereinfachten Darstellung von Figur 2 nicht ersichtlich ist, wie die Wärmeleitungselemente angeordnet sind, welche mindestens teilweise die Innenwandung 5 der Schale 1 bilden, die dem äusseren Mantel des Rohres 11 gegenüberliegt. Diese Wärmeleitungselemente, von welchen mindestens eines vorhanden ist, übertragen Wärme von den Leitungen 6 an die Rohrleitung 11. Da das mindestens eine Wärmeleitungselement dabei einen Teil der Innenwandung 5 der Schale 1 bildet, liegt die Rohrleitung 11 bei passender Dimensionierung der Schale 1 bzw. der Ausnehmung 5 flächig an dem Wärmeleitungselement an. Dies ergibt eine gute Wärmeübertragung. Es kann zusätzlich so sein, dass die mindestens eine Leitung 6 die Rohrleitung ebenfalls berührt.

Figur 3 zeigt eine Ausführungsform ähnlich derjenigen von Figur 2, worin in schaubildlicher Ansicht ein Teil des unteren Schalenteils 2' der Schale 2 der Anordnung 1 dargestellt ist. Nur teilweise dargestellt ist dabei der Aussenmantel 3 der Schale 2 mit einem schematisch als Block angedeuteten Befestigungsteil 16, welches mit einem Befestigungsteil 15 an dem anderen Schalenteil 2' zusammen wirken würde, um diese beiden Teile aneinander zu befestigen. Ersichtlich ist weiter die Wärmedämmung 4 sowie auf der rechten Seite der Figur eine der Leitungen 6. Diese verläuft in der Schale 2, wie dies auch für die andere Leitung 6 in dieser Schale gilt, welche indes nicht dargestellt ist. Die Anordnung 1 weist in diesem Beispiel Wärmeleitungselemente 7 und 8 auf, welche einerseits mit der jeweiligen Leitung 6 in wärmeleitender Verbindung stehen und andererseits einen Teil der Innenwandung 5 der Schale 2 bilden. An diese Innenwandung 5 kommt dann die Rohrleitung 11 mindestens teilweise zur Anlage, wenn die Schale an der Rohrleitung 11 befestigt ist und diese somit umschliesst. In dem Beispiel sind die Wärmeleitungselemente 7 und 8 derart ausgestaltet, dass sie einen im Wesentlichen zylinderförmigen Teil 7 bzw. 8 aufweisen, welcher teilweise offen ist. An die Ränder dieser Öffnung schliessen Laschen 7' und 7'' bzw. 8' und 8'' an, welche vom zylinderförmigen Teil weggebogen sind und die Innenwandung 5 der hohlzylindrischen Schale 2 bilden. Entsprechende Wärmeleitungselemente wären auch beim Schalenteil 2' vorgesehen, welches in Figur 3 nicht dargestellt ist. Die Wärmeleitungselemente sind somit im Querschnitt gesehen Ω-förmig (omega-förmig). Sie bestehen bevorzugt aus einem gut wärmeleitenden Metallblech und bevorzugt weiter aus einem federnden Metallblech, welches sich durch seine Dimensionierung und die Federeigenschaften gut an die jeweilige Rohrleitung 6 anlegt bzw. diese beaufschlagt, welche im zylinderförmigen Teil 7 bzw. 8 angeordnet ist. Dies ist in der Figur zur besseren Auseinanderhaltung von Leitung 6 und Wärmeleitelement 8 nicht genauer dargestellt. Die Dimension der Leitung 6 und dessen Aufnahme im Wärmeleitungselement 7 bzw. 8 wird aber so gewählt, dass sich ein enges Anliegen des jeweiligen Wärmeleitungselementes an der jeweiligen Leitung 6 ergibt. Diese Leitung 6 kann aus Kunststoff oder aus Metall bestehen oder aus einem Verbund von solchen Materialien. Die Leitungen 6 können dabei an ihren Enden mit den üblichen Verbindungselementen versehen sein, welche den Anschluss der Wasserzuführungen und - wegführungen bilden.

Die Ausführung der Laschen 7' und 7'' bzw. 8' und 8'' sind nur als Beispiel zu verstehen. Diese Laschen könnten auch grösser dimensioniert sein, um die Wärmeübertragungsfläche an die Rohrleitung 11 zu erhöhen. Auch könnten diese Laschen andere Formen aufweisen. Die Innenwandung 5 kann weiter mit mindestens einer Metallfolie versehen sein, welche z.B. eine Metallfolie 10 sein kann, die die Innenwandung 5 aus dem Wärmedämmmaterial 4 zwischen den Laschen 7'' und 8'' völlig abdeckt und sich z.B. unter die Laschen erstreckt. Damit kann auch zwischen den Laschen 7'' und 8'' eine höhere Wärmeleitung erzielt werden, als die äusserst geringe Wärmeleitung, die durch das Dämmmaterial 4 gegeben ist. Insbesondere kann aber auch eine Reflektion von Wärme von der Rohrleitung 11 erzielt werden. Eine Metallfolie kann auch als Folie 9 vorgesehen sein, welche sich unter die Lasche 7' bzw. 8' erstreckt und sich beispielsweise auch ein Stück in die Trennfläche der Wärmeisolation 4 der beiden Schalenteile 2' und 2'' erstreckt. Auf diese Weise kann eine vollständige Auskleidung der Innenwandung 5 mit wärmeleitendem Material erfolgen. Dies kann aber in einer anderen Ausführung auch so erfolgen, dass ein Wärmeleitungselement mit Elementen, z.B. Laschen, vorgesehen ist, welche rundherum die Innenwandung 5 bilden. Ein solches Wärmeleitungselement kann mit einer Leitung 6 in Verbindung stehen oder mit zwei oder mehreren Leitungen. Es können auch die Laschen 7" und 8" so ausgebildet sein, dass sie sich berühren oder fast berühren, so dass die Wärmeleitungselemente 7, 8 eine im Wesentlichen vollständige Auskleidung der Innenwandung 5 mit wärmeleitendem Material bilden. In diesem Ausführungsbeispiel würde dann die Metallfolie 10 entfallen, da die ganze Innenfläche der Schale 2 durch das mindestens eine Wärmeleitungselement 7, 8 gebildet ist.

## Patentansprüche

1. Heiz- oder Kühlanordnung (1) für eine Rohrleitung (11, 12), **gekennzeichnet durch** eine zum Umschliessen der Rohrleitung ausgebildete wärmeisolierende Schale (2), deren der Rohrleitung zugewandte Innenwandung (5) mindestens teilweise von mindestens einem Wärmeleitungselement (7, 7', 7'') gebildet ist, das mit mindestens einer in der Schale (2) verlaufenden Leitung (6) für ein Heiz- oder Kühlmedium in Wärmeleitverbindung steht.

2. Heiz- oder Kühlanordnung, **dadurch gekennzeichnet, dass** mehr als ein Wärmeleitungselement (7; 8) und mehr als eine Leitung (6) vorgesehen sind.

3. Heiz- oder Kühlanordnung nach Anspruch 1 oder 2, **dadurch gekennzeichnet, dass** die Innenwandung (5) im Wesentlichen vollflächig von dem Wärmeleitungselement oder den Wärmeleitungselementen (7, 8) gebildet ist.

4. Heiz- oder Kühlanordnung nach einem der Ansprüche 1 oder 2, **dadurch gekennzeichnet, dass** mindestens ein an das mindestens eine Wärmeleitungselement anschliessender Bereich der Innenwandung (5) mit einer Metallfolie (9, 10) versehen ist, welche insbesondere von Teilen (7', 7''; 8', 8") des Wärmeleitungselements überdeckt wird oder diese überdeckt.

5. Heiz- oder Kühlanordnung nach einem der Ansprüche 1 bis 4, **dadurch gekennzeichnet, dass** das mindestens eine Wärmeleitungselement (7; 8) eine in der Wärmeisolation eingebettete Aufnahme für die Leitung (6) ausbildet sowie davon ausgehende Laschen (7', 7''; 8', 8''), welche die Innenwandung (5) bilden.

6. Heiz- oder Kühlanordnung nach Anspruch 5, **dadurch gekennzeichnet, dass** die Aufnahme (7, 8) im Wesentlichen hohlzylindrisch und längsgeschlitzt ausgeführt ist, wobei die Laschen an den Schlitz anschliessen.

7. Heiz- oder Kühlanordnung nach einem der Ansprüche 1 bis 6, **dadurch gekennzeichnet, dass** das mindestens eine Wärmeleitungselement (7, 8) aus Metallblech gebildet ist.

8. Heiz- oder Kühlanordnung nach einem der Ansprüche 1 bis 7, **dadurch gekennzeichnet, dass** das mindestens eine Wärmeleitungselement (7, 8) die Leitung (6) federnd beaufschlagt.

9. Heiz- oder Kühlanordnung nach einem der Ansprüche 1 bis 8, **dadurch gekennzeichnet, dass** die Leitung (6) aus Kunststoff besteht.

10. Heiz- oder Kühlanordnung nach einem der Ansprüche 1 bis 9, **dadurch gekennzeichnet, dass** die Schale (2) aus zwei oder mehr zur Bildung der Schale aneinander passenden Schalenteilen (2', 2'') gebildet ist.

11. Heiz- oder Kühlanordnung nach Anspruch 10, **dadurch gekennzeichnet, dass** die Schalenteile (2', 2'') Befestigungsmittel (15, 16) aufweisen, mittels derer sie zur Bildung der Schale aneinander befestigbar sind.

12. Heiz- oder Kühlanordnung nach einem der Ansprüche 1 bis 11, **dadurch gekennzeichnet, dass** die Schale einen Aussenmantel (3) aus Metall oder Kunststoff sowie eine Wärmeisolation (4) mit einer zylindrischen Ausnehmung zur Aufnahme der Rohrleitung (11, 12) aufweist.

13. Heiz- oder Kühlanordnung nach einem der Ansprüche 1 bis 12, **dadurch gekennzeichnet, dass** die Wärmeisolation (4) aus einem Kunststoffmaterial gebildet ist, insbesondere aus einem geschäumten Kunststoffmaterial.

14. Anlage, in welcher eine zu heizende oder kühlende Substanz in einer Rohrleitung transportierbar ist, wobei mindestens ein Teil der Rohrleitung mit einer Heiz- oder Kühlanordnung nach einem der Ansprüche 1 bis 13 versehen ist.

15. Anlage nach Anspruch 14, wobei diese zum Transport flüssiger Schokolade oder zum Transport von Rohöl oder anderen unter bestimmter Transporttemperatur zu haltenden Medien vorgesehen ist.

16. Verfahren zur Heizung von Rohrleitungen für eine flüssige Substanz, insbesondere Schokolade oder Schweröl, auf eine Temperatur von ca. 30°C bis 100°C, wobei eine Heizanordnung nach einem der Ansprüche 1 bis 13 verwendet wird und die Leitung (6) für das Heizmedium mit einer geheizten Flüssigkeit beschickt wird.
